# FASCICULE DE BREVET EUROPEEN

(11) **EP 2 313 635 B1**
(45) Date de publication et mention de la délivrance du brevet: **16.04.2014**
(21) Numéro de dépôt: 09784511.9
(22) Date de dépôt: 10.07.2009
(51) Int. Cl.: F02K 9/60, F02K 9/64, F02K 7/18

(54) **RÉACTEUR COMPORTANT UNE PLURALITÉ DE MOTEURS-FUSÉES**
TRIEBWERK MIT MEHREREN RAKETENMOTOREN
THRUSTER COMPRISING A PLURALITY OF ROCKET MOTORS

(30) Priorité: 11.07.2008 FR 0854770
(43) Date de publication de la demande: 27.04.2011
(73) Titulaire: Snecma, 75015 Paris (FR)
(72) Inventeur: CONRARDY, Jean-Marie, F-27940 Courcelles Sur Seine (FR); PEYRISSE, Daniel, 27950 Saint Marcel (FR)
(74) Mandataire: Intès, Didier Gérard André
(86) Numéro de dépôt international: PCT/FR2009/051389
(87) Numéro de publication internationale: WO 2010/004232

(56) Documents cités:
- EP-A- 0 571 254
- EP-A- 0 604 279
- EP-A- 1 342 905
- DE-B- 1 025 681
- GB-A- 2 196 393
- DAINES R ET AL: "COMBINED ROCKET AND AIRBREATHING PROPULSION SYSTEMS FOR SPACE- LAUNCH APPLICATIONS" JOURNAL OF PROPULSION AND POWER, AMERICAN INSTITUTE OF AERONAUTICS AND ASTRONAUTICS. NEW YORK, US, vol. 14, no. 5, 1 septembre 1998 (1998-09-01), pages 605-612, XP000778441 ISSN: 0748-4658
- SCOTT W B: "AEROJET TESTS SHOW STRUTJET READY TO FLY" AVIATION WEEK AND SPACE TECHNOLOGY, MCGRAW-HILL COMPAGNY, NEW YORK, NY, US, vol. 151, no. 1, 5 juillet 1999 (1999-07-05), pages 57-60, XP000880803 ISSN: 0005-2175

## Description

L'invention se rapporte d'une façon générale à la propulsion hypersonique, c'est-à-dire faisant appel à la fois à la propulsion de type fusée et à la propulsion aérobie de type stato-réacteur ou super-stato réacteur. La propulsion en mode fusée a pour but d'accélérer le véhicule à une vitesse supersonique suffisante pour permettre le fonctionnement en mode stato-réacteur. L'invention concerne plus particulièrement l'agencement d'une pluralité de moteurs-fusées d'un type particulier dans un stato-réacteur pour obtenir un stato-réacteur de très longue durée d'utilisation, éventuellement réutilisable.

Il est connu, par exemple d'un article de W.B. Scott publié dans la revue "Aviation Week and Space Technology" du 5 juillet 1999 ou d'un article de Daines et Segal publié dans la revue « Journal of Propulsion and Power » de septembre-octobre 1998, d'agencer une pluralité de petits moteurs-fusées dans un stato-réacteur. Cependant, les article restent vagues sur la conception particulière des petits moteurs-fusées.

Or, un problème majeur est le refroidissement des parois des chambres de combustion et tuyères de ces petits moteurs-fusées, compte tenu de la température atteinte par les gaz de combustion à plus de 3000°K. Ceci rend la longévité de ces systèmes assez problématique, a fortiori si on cherche à réaliser un engin réutilisable.

L'invention permet de résoudre ce problème grâce à un choix particulier de type de moteur-fusée utilisé.

Plus particulièrement, l'invention concerne un réacteur supersonique, caractérisé en ce qu'il comporte un stato-réacteur comportant une chambre de combustion air-carburant et une pluralité de moteurs-fusées agencés dans la veine d'air, en amont de ladite chambre de combustion et en ce que chaque moteur-fusée, alimenté par un mélange d'ergols, comporte un corps tubulaire muni intérieurement d'une paroi coaxiale formant crépine définissant une zone d'injection de carburant annulaire s'étendant sur la plus grande partie de la longueur dudit corps et un injecteur de comburant débouchant axialement à l'intérieur de ladite crépine au voisinage de l'extrémité avant de celle-ci.

La chambre de combustion du moteur-fusée est essentiellement constituée par le volume interne de ladite crépine et ce type d'injection de carburant assure le refroidissement de celle-ci.

Cette structure permet l'injection latérale de la totalité du carburant ou des gaz riches en carburant au travers de la paroi de ladite crépine. Ce concept met en oeuvre un principe de refroidissement dit "par transpiration". Ce type d'injection du carburant permet un refroidissement simple de la paroi de la chambre de combustion avec la formation d'un film protecteur. On peut ainsi réaliser des moteurs-fusées de petit diamètre et les regrouper en mâts éjecteurs étroits. Un "mât" est constitué par le regroupement côte à côte, de plusieurs moteurs-fusées, disposés parallèlement en une seule rangée. De tels mâts peuvent être agencés pour constituer une grille installée dans la veine d'air en amont de la chambre de combustion du stato-réacteur. Cette grille présente un taux d'obstruction de la veine d'air, relativement faible.

Ainsi, par exemple, la paroi de la chambre de combustion est refroidie par la création, à la demande, d'un film d'un gaz riche en hydrogène injecté latéralement et protégeant la paroi de la chambre de combustion. Ce type de refroidissement était jusqu'à présent mésestimé car il a en principe pour effet de réduire la performance unitaire d'un moteur-fusée de ce type. Cependant, dans le cadre de l'installation dans un stato-réacteur, cette perte est compensée, en aval par le mélange et la post-combustion du carburant en excès (l'hydrogène ayant opéré le refroidissement) avec l'air traversant le stato-réacteur. Par conséquent, globalement, on obtient selon l'invention, une performance au moins égale, voire supérieure aux moteurs-fusées classiques alimentés par un mélange d'oxygène et d'hydrogène.

L'invention sera mieux comprise et d'autres avantages de celle-ci apparaîtront plus clairement à la lumière de la description qui va suivre d'un moteur-fusée et d'un réacteur supersonique équipé d'une pluralité de tels moteurs-fusées, donnée uniquement à titre d'exemple et faite en référence aux dessins annexés dans lesquels :
- la figure 1 est une vue schématique en coupe longitudinale d'un moteur-fusée conforme à l'invention ;
- la figure 2 est une vue de détail en perspective avec arrachement et coupe, de la partie avant d'un mât de moteurs-fusées ; et
- la figure 3 est une vue schématique d'un réacteur supersonique conforme à l'invention.

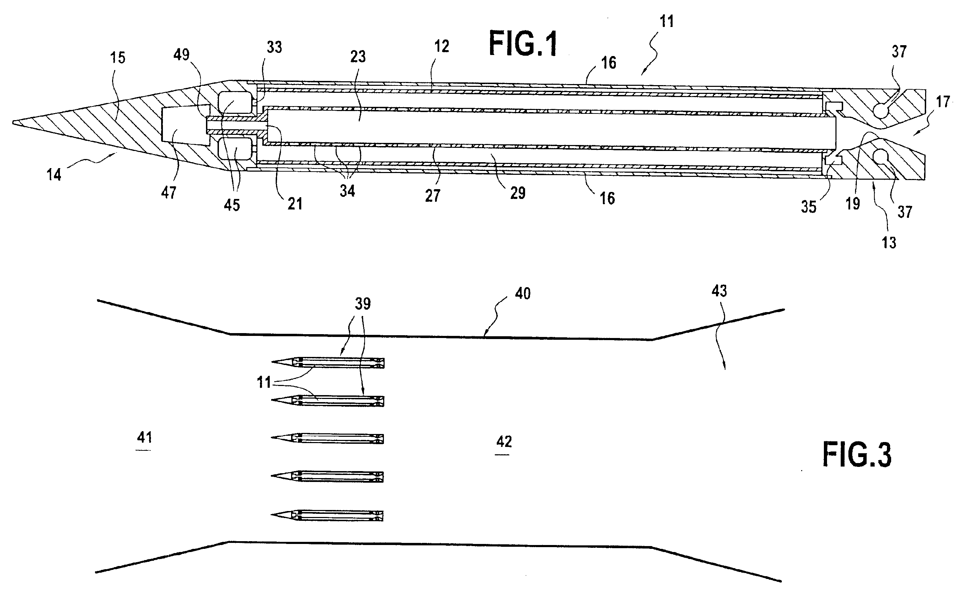

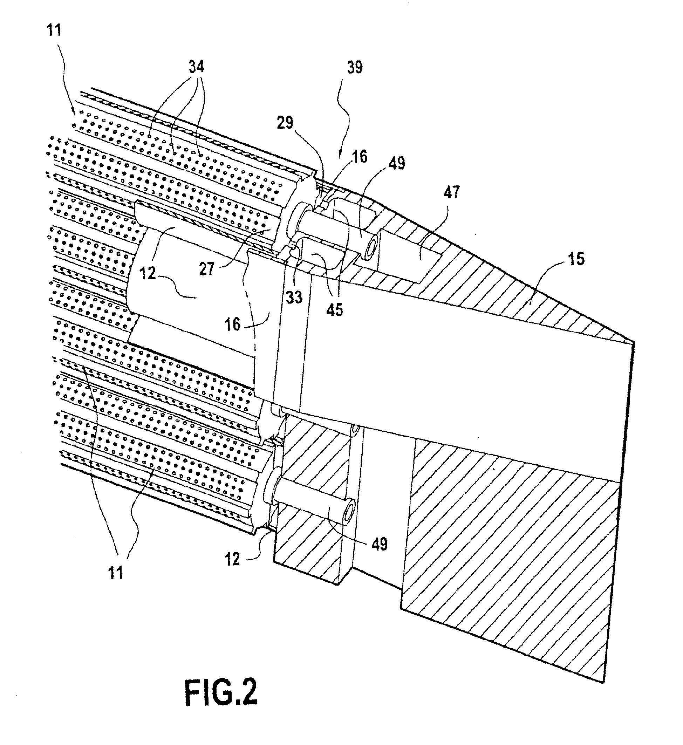

En se reportant plus particulièrement aux figures 1 et 2, on a représenté un moteur-fusée 11 susceptible d'être installé dans un stato-réacteur qui sera décrit plus loin.

Le moteur-fusée 11 comporte un corps 12 globalement cylindrique muni d'un nez profilé 15 à l'avant et d'une tuyère d'échappement 17 comprenant un col 19 formant restriction d'écoulement, pour augmenter la vitesse des gaz éjectés. Un injecteur de comburant 21 est disposé axialement à l'avant et débouche dans une chambre de combustion 23, ici globalement cylindrique, s'étendant entre l'orifice de l'injecteur 21 (à l'avant) et la tuyère 17 (à l'arrière). La paroi 27 de la chambre de combustion 23 est coaxiale à la paroi du corps 12. Ces deux parois délimitent entre elles un espace annulaire cylindrique 29.

Dans l'exemple décrit, le moteur-fusée 11 fait partie d'un mât 39 associant une pluralité de moteurs-fusées semblables, disposés côte à côte longitudinalement. Un tel mât comporte un bloc avant 14 qui forme le nez profilé 15 de tous les moteurs-fusées et un bloc arrière 13 dans lequel sont intégrées toutes les tuyères d'échappement 17. Deux plaques latérales 16 relient le bloc-avant 14 et la bloc arrière 13. Elles complètent le carénage du mât 39 et protègent les corps 12 de tous les moteurs-fusées.

La structure du mât sera décrite en détail ci-après.

Selon une caractéristique importante de l'invention, la paroi 27 de la chambre de combustion est agencée en crépine et l'espace 29 entre les deux parois constitue une zone d'injection de carburant, annulaire, qui s'étend ainsi sur la plus grande partie de la longueur du corps. Un injecteur de carburant 33 se situe à l'avant. Il communique avec l'espace 29. Par crépine, on entend toute paroi laissant passer le carburant ou un gaz riche en carburant par une multitude de perforations réparties sur toute sa surface. Une telle crépine peut être constituée par un matériau poreux ou par un cylindre perforé de trous 34 de faible diamètre, comme représenté. Cet agencement procure un refroidissement de la paroi par "transpiration" avec formation, le long de la face interne de la crépine, d'un film protecteur de carburant permettant à la paroi 27 de résister malgré la température élevée qui règne dans la chambre de combustion 23.

La répartition des perforations peut varier le long de la chambre de combustion afin d'obtenir un film suffisant, y compris pour la protection du col 19.

Avantageusement, on prévoit des moyens supplémentaires d'injection 35 de carburant ou de gaz riche en carburant. Ces moyens débouchent dans la chambre de combustion immédiatement en avant du col 19 pour renforcer l'efficacité du film protecteur circulant le long de la paroi du col. Le gaz riche en carburant peut provenir de la même source alimentant la chambre de combustion ou être plus froid, par adjonction d'une quantité supplémentaire de carburant.

De plus, des canaux de passage et d'injection de carburant 37 sont implantés dans un espace disponible autour du col 19. L'utilité et la mise en oeuvre de ces canaux seront décrits plus loin.

Un tel moteur-fusée peut par exemple fonctionner par la réaction de deux ergols comme par exemple un gaz riche en hydrogène pour le carburant, traversant la crépine et de l'oxygène liquide pour le comburant.

Comme le montre les figures 2 et 3, la structure d'un tel moteur-fusée est avantageuse, en raison de son faible diamètre, pour réaliser des mâts 39 étroits et obtenir ainsi une grille serrée de mâts, à faible taux d'obstruction de la veine d'air, à l'intérieur d'un stato-réacteur 40, en amont de la chambre de mélange et de combustion 42 de celui-ci.

Comme le montre la figure 3, plusieurs moteurs-fusées tels que décrits ci-dessus sont installés à l'intérieur du stato-réacteur 40. Celui-ci se compose d'une entrée d'air 41, de la chambre de combustion 42 qui reçoit le carburant du stato-réacteur et d'une tuyère de sortie 43. Les moyens d'injection du carburant du stato-réacteur ne sont pas représentés. L'entrée d'air débouche dans la chambre de combustion. Les moteurs-fusées 11 sont installés dans la veine d'air en amont de la chambre de combustion 42. Ils sont disposés parallèlement à la direction d'écoulement des gaz.

Comme représenté, ils sont agencés côte à côte en mâts, chaque mât 39 s'étendant transversalement dans la veine. Le nez profilé 15 est commun à tous les moteurs-fusées d'un même mât. Il a globalement la forme d'une lame effilée vers l'avant et renferme un canal d'alimentation de carburant 45 et un canal d'alimentation de comburant 47. Le canal d'alimentation de carburant 45 communique avec tous les espaces annulaires 29 tandis que le canal d'alimentation de comburant communique avec toutes les chambres de combustion 23 par des conduits 49 parallèles débouchant respectivement axialement à l'avant des chambres de combustion 23.

Plusieurs mâts 39 peuvent ainsi être disposés parallèlement les uns aux autres dans la veine (ou en couronne pour une veine annulaire) en étant écartés d'une distance suffisante pour former une grille présentant un taux d'obstruction de la veine relativement faible.

En fonctionnement, le film de carburant ou de gaz riche en carburant qui assure le refroidissement par transpiration est brûlé en post-combustion dans le stato-réacteur.

De même, les canaux 37 fournissent du carburant à la chambre de combustion 42 du stato-réacteur. Ils ne sont pas utilisés pendant le fonctionnement des moteurs-fusées mais en phase de fonctionnement supersonique. Le rendement de combustion est amélioré en raison de l'espacement réduit entre les mâts.

## Revendications

1. Réacteur supersonique comportant un stato-réacteur (40) comprenant une chambre de combustion air-carburant (42) et une pluralité de moteurs-fusées (11) agencés dans la veine d'air, en amont de ladite chambre de combustion (42) et **caractérisé en ce qu'**un tel moteur-fusée de la pluralité de moteurs-fusées (11), alimenté par un mélange d'ergols, comporte un corps tubulaire (12) muni intérieurement d'une paroi (27) coaxiale formant crépine définissant une zone d'injection de carburant (29) annulaire s'étendant sur la plus grande partie de la longueur dudit corps et un injecteur de comburant (21) débouchant axialement à l'intérieur de ladite crépine au voisinage de l'extrémité avant de celle-ci.

2. Réacteur supersonique selon la revendication 1, **caractérisé en ce que** lesdits moteurs-fusées (11) sont disposés côte à côte en mâts (39), lesdits mâts étant espacés les uns des autres dans ladite veine.

3. Réacteur supersonique selon la revendication 1 ou 2, **caractérisé en ce que**, pour un tel moteur-fusée ladite crépine comporte une paroi cylindrique perforée.

4. Réacteur supersonique selon la revendication 1 ou 2, **caractérisé en ce que**, pour un tel moteur-fusée, ladite crépine comporte une paroi poreuse.

5. Réacteur supersonique selon l'une des revendications précédentes, **caractérisé en ce que** l'extrémité aval d'un tel moteur-fusée est munie d'une tuyère d'échappement (17) comprenant un col (19).

6. Réacteur supersonique selon la revendication 5, **caractérisé en ce que**, pour un tel moteur-fusée, des moyens d'injection supplémentaires de carburant (35) sont agencés à proximité immédiate dudit col (19) en amont de celui-ci pour créer un film protecteur de la paroi dudit col.

7. Réacteur supersonique selon l'une des revendications 5 ou 6, **caractérisé en ce que**, pour un tel moteur-fusée, des canaux de passage et d'injection de carburant (37) sont implantés dans un espace disponible autour dudit col (19).

8. Réacteur supersonique selon l'une des revendications précédentes, **caractérisé en ce que** ledit carburant est un gaz riche en hydrogène et **en ce que** ledit comburant est de l'oxygène.

## Patentansprüche

1. Überschallstrahltriebwerk, umfassend ein Staustrahltriebwerk (40) mit einer Luft-Treibstoff-Brennkammer (42) und einer Vielzahl von Raketentriebwerken (11), die in dem Luftkanal stromaufwärts der Brennkammer (42) angeordnet sind, und **dadurch gekennzeichnet, dass** ein solches Raketentriebwerk der Vielzahl von Raketentriebwerken (11), das mit einem Treibstoffgemisch beaufschlagt wird, ein rohrförmiges Gehäuse (12), welches innen mit einer ein Sieb bildenden koaxialen Wand (27) ausgestattet ist, die einen sich über den größten Teil der Länge des Gehäuses erstreckenden ringförmigen Treibstoffeinspritzbereich (29) definiert, sowie einen Injektor für ein die Verbrennung förderndes Mittel (21), der axial innerhalb des Siebes in der Nähe seines vorderen Endes ausmündet, umfasst.

2. Überschallstrahltriebwerk nach Anspruch 1, **dadurch gekennzeichnet, dass** die Raketentriebwerke (11) Seite an Seite als Masten (39) angeordnet sind, wobei die Masten in dem Kanal voneinander beabstandet sind.

3. Überschallstrahltriebwerk nach Anspruch 1 oder 2, **dadurch gekennzeichnet, dass** bei einem solchen Raketentriebwerk das Sieb eine perforierte zylindrische Wand umfasst.

4. Überschallstrahltriebwerk nach Anspruch 1 oder 2, **dadurch gekennzeichnet, dass** bei einem solchen Raketentriebwerk das Sieb eine poröse Wand umfasst.

5. Überschallstrahltriebwerk nach einem der vorhergehenden Ansprüche, **dadurch gekennzeichnet, dass** das stromabwärtige Ende eines solchen Raketentriebwerks mit einer einen Hals (19) umfassenden Schubdüse (17) ausgestattet ist.

6. Überschallstrahltriebwerk nach Anspruch 5, **dadurch gekennzeichnet, dass** bei einem solchen Raketentriebwerk zusätzliche Treibstoffeinspritzmittel (35) in unmittelbarer Nähe des Halses (19) stromaufwärts dessen angeordnet sind, um einen Schutzfilm der Wand des Halses zu erzeugen.

7. Überschallstrahltriebwerk nach einem der Ansprüche 5 oder 6, **dadurch gekennzeichnet, dass** bei einem solchen Raketentriebwerk Kanäle für den Durchlass und zum Einspritzen von Treibstoff (37) in einem um den Hals (19) verfügbaren Raum eingesetzt sind.

8. Überschallstrahltriebwerk nach einem der vorhergehenden Ansprüche, **dadurch gekennzeichnet, dass** der Treibstoff ein wasserstoffreiches Gas ist und dass das die Verbrennung fördernde Mittel Sauerstoff ist.

## Claims

1. A supersonic jet, including a ramjet (40) comprising an air-fuel combustion chamber (42) and a plurality of rocket engines (11) arranged in the airstream upstream from said combustion chamber (42) and **characterized in that** such a rocket engine of the plurality of rocket engines (11), fed with a mixture of propellant components, comprises a tubular body (12) provided internally with a coaxial wall (27) forming a screen that defines an annular fuel injection zone (29) extending over the major fraction of the length of said body, and an oxidizer injector (21) opening out axially into the inside of said screen in the vicinity of the front end thereof.

2. A supersonic jet according to claim 1, **characterized in that** said rocket engines (11) are disposed side by side in pylons (39), said pylons being spaced apart from one another in said stream.

3. A supersonic jet according to claim 1 or claim 2, **characterized in that**, for such a rocket engine, said screen comprises a perforated cylindrical wall.

4. A supersonic jet according to claim 1 or claim 2, **characterized in that**, for such a rocket engine, said screen comprises a porous wall.

5. A supersonic jet according to any preceding claim, **characterized in that** the downstream end of such a rocket engine is provided with an exhaust nozzle (17) including a throat (19).

6. A supersonic jet according to claim 5, **characterized in that**, for such a rocket engine, additional fuel injector means (35) are arranged in the immediate proximity of said throat (19) upstream thereof in order to create a film protecting the wall of said throat.

7. A supersonic jet according to claim 5 or claim 6, **characterized in that**, for such a rocket engine, fuel injection and flow channels (37) are installed in space available around said throat (19).

8. A supersonic jet according to any preceding claim, **characterized in that** said fuel is a gas rich in hydrogen and **in that** said oxidizer is oxygen.
